# EUROPEAN PATENT APPLICATION

(11) **EP 2 457 875 A1**
(43) Date of publication of application: **30.05.2012**
(21) Application number: 10802207.0
(22) Date of filing: 14.07.2010
(51) Int. Cl.: C02F 1/26, B01D 9/02, B01D 11/04, B01D 21/01, B01F 3/08, C02F 1/52

(54) **METHOD FOR TREATMENT OF LIQUID WASTE OF COATING AGENT**

(30) Priority: 22.07.2009 JP 2009187548; 26.03.2010 JP 2010072719
(71) Applicant: Japan Atomic Energy Agency, Naka-gun Ibaraki 319-1184 (JP); Issei Co., Ltd., Kyoto 603-8487 (JP)
(72) Inventor: NAGANAWA, Hirochika, Naka-gun Ibaraki 319-1195 (JP); YANASE, Nobuyuki, Naka-gun Ibaraki 319-1195 (JP); NAGANO, Tetsushi, Naka-gun Ibaraki 319-1195 (JP); HAMADA, Masaaki, Kyoto-shi Kyoto 603-8487 (JP); SAKAMOTO, Atsushi, Yawata-shi Kyoto 614-8332 (JP); HAMADA, Kohei, Kyoto-shi Kyoto 603-8487 (JP)
(74) Representative: Scaddan, Gareth Casey
(86) International application number: PCT/JP2010/061913
(87) International publication number: WO 2011/010587

(57) **Abstract**

PROBLEM: To provide a novel paint waste liquid treatment method that is of simple construction, may be handled with ease, is easy to operate, and has good efficiency.

SOLUTION MEANS: A method of treating waste liquid containing paint associated with the present invention is **characterized in that** at least one of either a treatment solution or a waste liquid containing paint is atomized and supplied in droplet form to a treatment tank, and a treatment solution phase and a waste liquid phase are mixed to produce flowing material in an emulsified state (a flowing emulsion), to treat said waste liquid. The present invention makes it possible for treatment of paint waste liquid to be carried out more simply and more easily than is the case with biological waste liquid treatment techniques, and makes it possible for treatment to be carried out at sites where waste liquid is generated.

## Description

### TECHNICAL FIELD

The present invention relates to a method for treatment of waste liquid that includes paint or other waste liquid that contains organic constituent(s), and to a paint booth comprising an apparatus for treatment of waste liquid that includes paint.

### BACKGROUND ART

Among conventionally known methods for treating waste liquid that contains paint (hereinafter referred to in the present specification as "paint waste liquid"), there are, for example, methods in which microorganisms are immobilized on a carrier so as to permit decomposition and treatment of paint waste liquid to be carried out biologically (see Patent Reference No. 1).

Also, while no particular mention is believed to be made with respect to waste liquid treatment or similar applications, a continuous liquid-liquid extraction apparatus is known that is characterized by use of a liquid supply pump to introduce an aqueous solution into an extraction solvent by way of an atomization head to create a flowing emulsion, i.e., flowing material in an emulsified state, produced by mixture of an aqueous phase and a solvent phase, for the purpose of implementing a liquid-liquid extraction method (solvent extraction method) in which metal ions or other such constituents present in aqueous solution are extracted by a solvent (organic solvent or the like) that is immiscible with water and that contains an extraction agent (see Patent Reference No. 2).

### PRIOR ART REFERENCES

### PATENT REFERENCES

PATENT REFERENCE NO. 1: Japanese Patent Application Publication Kokai No. 2008-183531
PATENT REFERENCE NO. 2: Japanese Patent Application Publication Kokai No. 2008-289975

### DISCLOSURE OF THE INVENTION

### PROBLEM TO BE SOLVED BY INVENTION

Because conventional biological methods in which microorganisms are used for decomposition and treatment of paint waste liquid are such that much time is required for decomposition and treatment, complex control with regard to operation of the apparatus is desired, including the fact that the pH, liquid temperature, and so forth within the microorganism treatment tank must constantly be properly controlled so that decomposition activity of the microorganisms can be made to proceed as efficiently as possible, and the fact that such things as air (oxygen) and nutrient sources must be supplied to the microorganisms. Moreover, there are also such operational problems as the fact that microorganisms die out and microorganism activity decreases, preventing paint waste liquid treatment from being properly carried out, when conditions for microorganism activity wander beyond proper ranges.

It is an object of the present invention to provide a novel paint waste liquid treatment method that is of simple construction, may be handled with ease, is easy to operate, and has good efficiency.

### MEANS FOR SOLVING PROBLEM

A method of treating waste liquid containing paint associated with the present invention is **characterized in that** causing at least one of either a treatment solution or a waste liquid containing paint to be atomized and supplied in droplet form to a treatment tank permits a treatment solution phase and a waste liquid phase to be mixed to produce a flowing emulsion comprising material in an emulsified state to treat the paint waste liquid.

Treatment of paint waste liquid refers specifically to efficient separation and removal of solvent(s) serving as treatment solution and surface active agent(s) and pigment particles contained in paint waste liquid. Furthermore, solvent extraction methods employing flowing emulsions are liquid-liquid extractions, i.e., techniques making it possible for target constituent(s) dissolved in aqueous solution to be extracted by organic solvent that is immiscible with water. Accordingly, application of solvent extraction methods employing flowing emulsions and constituted as described above to treatment of paint waste liquids makes it possible to achieve novel waste liquid treatment methods that do not employ decomposition by microorganisms.

But whereas the aforementioned conventionally known solvent extraction methods employing flowing emulsions are what might be called "unistream techniques" involving either a downward-flowing stream or an upward-flowing stream depending on the specific gravity of the extraction solvent, for increased treatment efficiency when applied to treatment of paint waste liquids it would be preferred that what might be called "countercurrent stream techniques" in which treatment solution phases and waste liquid phases are mixed in countercurrent fashion be employed.

In accordance with the foregoing constitution, resin particles, pigment particles, and other solids constituting impurities present within paint waste liquid can be separated upon being made to flocculate at the interface between the waste liquid phase and the treatment solution phase, and solvents or other constituents which dissolve in organic solvent and which are present within paint can be extracted by the treatment solution phase (extraction solution phase) so as to permit removal of impurities other than water from water-based paint waste liquids.

In accordance with the present invention, in mixing paint waste liquid and treatment solution, at least one of the two is atomized, and when paint waste liquid is supplied in atomized form, the paint waste liquid may, for example, be atomized so as to form droplets which are supplied after the fashion of a shower from above the liquid surface in the treatment tank, or the waste liquid atomizing head may, for example, be inserted in submerged fashion within the liquid phase so that supply thereof takes place with production of droplets within the liquid phase within the treatment tank. On the other hand, when treatment solution is supplied in atomized form, it is preferred that atomization be made to take place with the atomizing head inserted in submerged fashion within the liquid phase within the treatment tank. Moreover, in accordance with the present invention, the treatment solution and the paint waste liquid may both be atomized, atomization of both making it possible to more easily obtain a satisfactory emulsified and mixed state for improved treatment efficiency.

As the foregoing atomizing head for atomizing paint waste liquid or treatment solution, it is possible to employ a structure in which mesh or pores are present at the tip portion of a supply pipe, a structure provided with a porous body or the like, a structure in which holes have been formed at the tip portion of a length of blind pipe, and so forth.

While there is no particular restriction with respect to the size of the openings in the mesh or the diameter of the holes at the sheet or porous body in the atomizing head employed when atomizing paint waste liquid so long as the hole diameter is such as to permit emulsification to be achieved, 1 mm to 7 mm is, for example, preferred. This is because too large a hole diameter will make it difficult to achieve a satisfactory emulsified and mixed state, and too small a hole diameter will increase the likelihood that the atomizing head will become clogged.

As employment of too large a size for the openings in the mesh or the diameter of the holes at the sheet or porous body in the atomizing head employed when atomizing treatment solution will make it difficult to achieve a satisfactory emulsified and mixed state, it is preferred that this be 1 µm to 5 mm, and particularly preferred that this be 10 µm to 100 µm.

In accordance with the present invention, it being sufficient that the treatment tank be such as to allow paint waste liquid and treatment solution to be adequately mixed and a satisfactory emulsified and mixed state to be achieved, there is no particular restriction with respect to the shape and so forth of the treatment tank, and it is possible to employ a treatment tank having a shape which is such that the cross-sectional shape thereof is rectangular, circular, or the like. In particular, a circular shape is preferred therefor, as it discourages formation of dead space and causes flow of liquid to be uniform.

The paint waste liquid treatment method of the present invention is capable of treating electrodeposition paint waste liquid, paint waste liquid collected from a paint booth, paint mist, volatile organic solvent waste liquid collected during painting or drying, waste liquid from cleaning of paint booths and painting equipment, paint booth ventilation cleaning waste liquid, and other such paint waste liquids.

In accordance with the present invention, two or more treatment tanks may be employed so as to permit multistage treatment in which effluent obtained from treatment in a first stage is supplied to a subsequent treatment tank. Multistage treatment makes it possible for paint waste liquid to be treated to an even higher degree.

A second method of treating paint waste liquid associated with the present invention is **characterized in that** the treatment solution is atomized and is supplied from one side of the treatment tank; and the paint waste liquid, which may be atomized or unatomized, is supplied from an other side thereof, the other side being opposite the one side. Supplying atomized treatment solution and paint waste liquid from opposite directions in this fashion makes it possible for the two to mix efficiently, and for emulsification to occur in stable fashion. As a result, it is possible to improve treatment efficiency and to cause treatment to be carried out continuously and for shorter periods of time.

A third method of treating paint waste liquid associated with the present invention is **characterized in that** the paint waste liquid being treated is a water-based waste liquid, and the treatment solution is a nonaqueous organic solvent. By causing the waste liquid to be water-based and by causing the treatment solution to be a nonaqueous organic solvent, this allows treatment of paint waste liquid to proceed efficiently, without either dissolving in the other, within the treatment tank.

As the foregoing water-based paint waste liquid, the following may be cited as examples: electrodeposition paint waste liquid, paint waste liquid collected when water is used to clean the interior of a paint booth, volatile organic compounds generated during painting or drying or paint mist collected using a water shower or the like, water-based paint cleaning waste liquid produced when cleaning paint manufacturing apparatuses or the like during paint manufacturing operations, water-based waste liquid produced during resin manufacturing operations, water-based waste liquid produced during pigment manufacturing operations, water-based waste liquid produced during additive manufacturing operations, and so forth. As described above, by causing the waste liquid to be water-based waste liquid and by employing a treatment solution comprising nonaqueous organic solvent, this allows treatment of the water-based waste liquid to proceed efficiently.

As the nonaqueous organic solvent employed as the foregoing treatment solution, there should be no particular problem so long as it is a substantially nonaqueous organic solvent; for example, the following may be employed singly or in combination: pentane, hexane, heptane, and other such chained hydrocarbons; cyclohexane, toluene, and other such cyclic hydrocarbons; pentyl alcohol and other such alcohols; methyl isobutyl ketone, cyclohexanone, and other such ketones; methyl butyl ether and other such ethers; ethyl acetate, propyl acetate, and other such esters; chloroform and other such halogenated hydrocarbons; lamp oil, kerosene, and other such petroleum distillates; and the like. While there is no particular limitation regarding which of these solvents may be used, chained hydrocarbons, cyclic hydrocarbons, ketones, esters, halogenated hydrocarbons, and the like may be favorably employed. Lamp oil, kerosene, and so forth are more favorably employed from the standpoints of ease of handling, cost, and so forth.

A fourth method of treating paint waste liquid associated with the present invention is **characterized in that** a salting agent is present. For example, with pigment particles or other such particulate constituent, addition of a small amount of salting agent will promote flocculation at the interface due to mutual adsorption/assembly of dispersoid particles suspended within waste liquid, and decrease in solubility of surface active agent and organic constituents within waste liquid will cause precipitation or will facilitate extraction by the treatment solution phase, making it possible to efficiently treat paint waste liquid. That is, solvent(s) and surface active agent(s), which are constituents that are dissolved in paint waste liquid, are recovered/removed by liquid-liquid extraction, and pigments and other such particulate constituent(s) are recovered/removed by liquid-liquid interface adsorption.

Moreover, there is no particular limitation with regard to the foregoing salting agent, it being possible to employ ordinary salting agents; for example, chlorides or sulfates of magnesium, iron, aluminum and other such metals and so forth may be employed singly or in combination. Among these, sulfated compounds are favorably employed, and magnesium sulfate is particularly favorably employed.

While there is no limitation with respect to the amount of the foregoing salting agent that is present, it is preferred that this be present in an amount that is 0.02 mol/L to 0.2 mol/L, and based on testing it is especially preferred that this be present in an amount that is 0.05 mol/L to 0.15 mol/L.

With regard to the method of adding the foregoing salting agent to the treatment tank, a wide variety of methods may be employed, it being sufficient that the dissociated ions from the salting agent be present within the waste liquid at the time that the waste liquid and the treatment solution ultimately come in contact within the flowing emulsion. For example, an aqueous solution of the salting agent may be directly added to the treatment tank, or the salting agent may be added to the waste liquid in advance.

A fifth method of treating paint waste liquid associated with the present invention is **characterized in that** silicate mineral powder is present in the treatment tank. Addition of silicate mineral powder permits efficient aggregation and separation of pigment, resin, and other such microparticulate solids within waste liquid. There is no particular limitation with respect to silicate mineral; for example, the following may be used singly or in combination: montmorillonite, kaolin, saponite, hectorite, beidellite, stevensite, nontronite, zeolite, and so forth. Natural mineral(s) having one, two, or more of these minerals as primary constituent(s) may be employed. Among these, montmorillonite, kaolin, and the like are favorably employed; and among natural minerals, bentonite, shirasu, or the like, with montmorillonite as primary constituent, may be favorably employed.

While there is no limitation with respect to the amount of the foregoing silicate mineral that is present, it is preferred that this be present in an amount that is 0.3 g/L to 30 g/L, and based on testing it is especially preferred that this be present in an amount that is 0.5 g/L to 5 g/L.

With regard to the method of adding the foregoing silicate mineral to the treatment tank, a wide variety of methods may be employed, it being sufficient that the silicate mineral powder be present in the vicinity of the interface between the waste liquid and the treatment solution at the time that the waste liquid and the treatment solution ultimately come in contact within the flowing emulsion. For example, a slurry or the like of the silicate mineral powder may be directly added to the treatment tank, or the silicate mineral powder may be mixed and dispersed within the waste liquid in advance.

A sixth method of treating paint waste liquid associated with the present invention is **characterized in that** a flocculant containing a microbial enzyme solution is also present in the treatment tank. Depending on type of paint and so forth, simultaneous with salting agent, presence of a flocculant containing a microbial enzyme solution may make it possible to promote aggregation of particulate constituent(s) at the interface between the waste liquid phase and the treatment solution phase. At such time, unlike the silicate mineral powder, the flocculant itself is not incorporated into the substances undergoing aggregation. Although the mechanism by which aggregation of particles at the two-phase interface is promoted remains unclear, it is thought that aggregation might be promoted as a result of dewatering of the substances undergoing aggregation by the microbial enzyme.

While there is no limitation with respect to the amount of the foregoing flocculant containing microbial enzyme that is present, it is preferred that this be present in an amount that is 0.3 g/L to 30 g/L, and based on testing it is especially preferred that this be present in an amount that is 0.5 g/L to 5 g/L.

With regard to the method of adding the foregoing flocculant containing microbial enzyme to the treatment tank, a wide variety of methods may be employed, it being sufficient that the flocculant be present in the vicinity of the interface between the waste liquid and the treatment solution at the time that the waste liquid and the treatment solution ultimately come in contact within the flowing emulsion. For example, the flocculant may be directly added to the treatment tank, or the flocculant may be added to the waste liquid in advance, or the flocculant may be added to the treatment solution in advance.

A seventh method of treating paint waste liquid associated with the present invention is a paint waste liquid treatment method **characterized in that** a recyclable effluent is obtained as a result of treating a water-based waste liquid containing paint. Because effluent obtained as a result of treating water-based paint waste liquid is such that contaminants have been removed therefrom, this may be recycled as liquid for use in cleaning the interiors of paint booths, and this may be recycled for collection of solvents and the like contained within air ventilated from paint booths and drying facilities. Furthermore, even where this is to be disposed of, disposal is made easy because contaminants have been removed therefrom.

An eighth waste liquid treatment method associated with the present invention is the same as the paint waste liquid treatment methods according to claims 3 through 7, except that it is **characterized in that** it is different with respect to the fact that the waste liquid to be treated is a water-based waste liquid containing an organic constituent generated by a painting pretreatment operation, a machining operation, a resin manufacturing operation, a pigment manufacturing operation, a food manufacturing operation, and/or a cleaning operation. Even if the waste liquid does not contain paint, but it is degreasing waste liquid generated during pretreatment carried out prior to painting, phosphate treatment waste liquid, or the like; or it is waste liquid containing cutting oil or cutting chips generated by machining operations; or the like, treatment methods associated with the present invention will make it possible to carry out treatment efficiently in the same manner as was the case with water-based waste liquid containing paint

The foregoing first through seventh methods of treating paint waste liquid associated with the present invention may be implemented in the form of a waste liquid paint booth. In such case, treatment of water-based waste liquid makes it possible to obtain a recyclable effluent. Liquids for use in cleaning the interiors of paint booths and liquids for collection of solvents and so forth present within ventilated air may be used in cyclic fashion.

As described above, paint waste liquid treatment methods associated with the present invention make it possible for waste liquid to be treated in continuous fashion; furthermore, because the apparatus is compact and is of simple construction, it is easy to operate.

### BENEFIT OF INVENTION

Paint waste liquid treatment methods in accordance with the present invention make it possible for treatment of paint waste liquid to be carried out more simply and more easily than is the case with biological waste liquid treatment techniques, and have excellent characteristics such as the fact that extraction capacity is large, rapid extraction is permitted, and running cost is low due to lack of need for external mechanical forces to maintain the two liquid phases in their mixed (emulsified) state. This being the case, it is also possible to carry out treatment at sites where waste liquid is generated. Furthermore, methods in accordance with the present invention make it possible for effluent obtained as a result of treatment to be circulated and recycled. In addition, treatment of waste liquid or the like generated during pretreatment carried out prior to painting is also possible.

### EMBODIMENTS FOR CARRYING OUT INVENTION

Below, where embodiments of a paint waste liquid treatment method associated with the present invention are described with reference to the drawings, these should not be interpreted in such manner as to limit the scope of the present invention. Furthermore, the relationship among the respective embodiments and working examples is not exclusive but is mutually complementary in nature. Accordingly, implicit therewithin is the possibility that these may be combined and employed as appropriate.

### FIRST EMBODIMENT

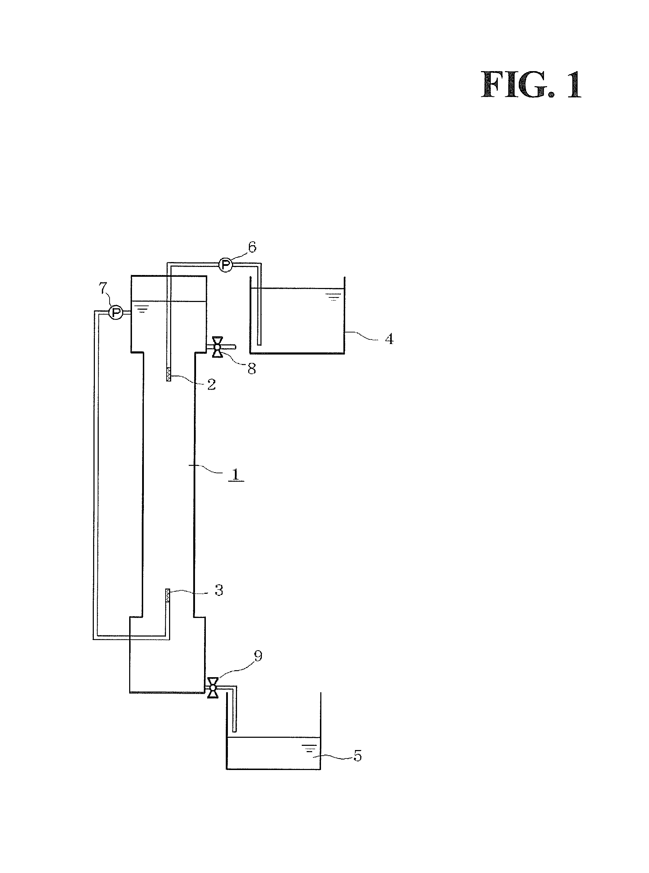

Described with reference to FIG. 1 is an example of a waste liquid treatment method associated with the present invention, this method being such that both paint waste liquid and treatment solution are atomized and supplied to a treatment tank.
As shown in FIG. 1, treatment solution supplied by way of atomizing head 3 from the lower portion of treatment tank 1 travels to the upper portion thereof, being circulated by treatment solution circulation pump 7. Waste liquid is supplied by pump 6 from waste liquid tank 4 to the upper portion of treatment tank 1 by way of atomizing head 2. Within treatment tank 1, waste liquid phase and treatment solution phase mix to produce emulsified flow (flowing emulsion). This takes the form of streams flowing in countercurrent fashion, with the treatment solution which contains solvent, organic constituents, and the like that have been extracted from the waste liquid occupying an upward-moving stream, and with what is left of the waste liquid following removal of organic constituents therefrom occupying a downward-moving stream. Solid content flocculating at the interface between the two phases within the flowing emulsion aggregates beneath the separated treatment solution phase in the upper portion of the treatment tank, and is discharged therefrom via aggregated insoluble content discharge outlet 8. The treated waste liquid is discharged into effluent tank 5 via effluent discharge outlet 9 located at the lower portion of treatment tank 1.

### SECOND EMBODIMENT

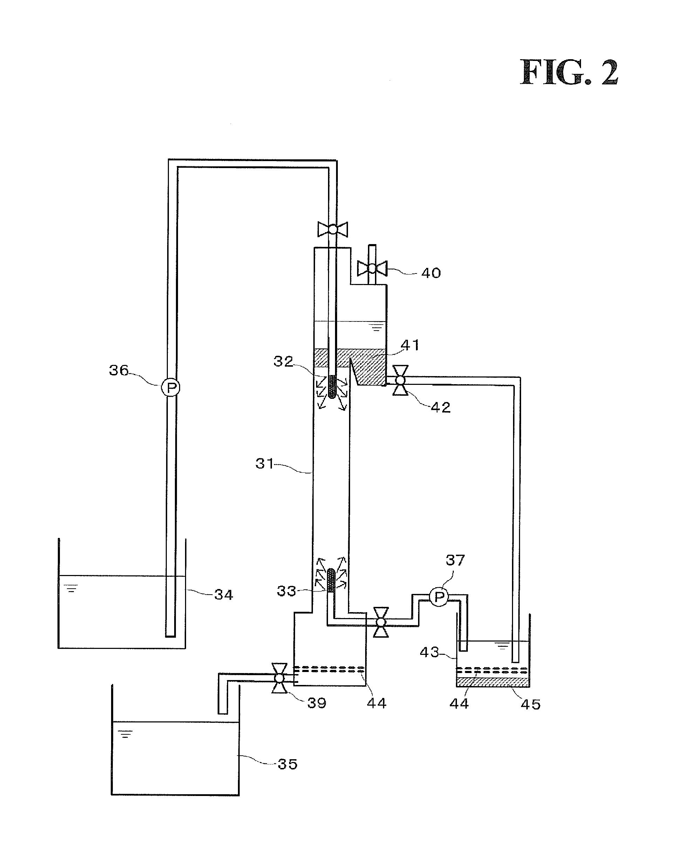

Described with reference to FIG. 2 is another example of a waste liquid treatment method associated with the present invention.
As shown in FIG. 2, treatment solution pumped by pump 37 from treatment solution buffer tank 43 is supplied by way of atomizing head 33 to the lower portion of treatment tank 31, from which point it moves to the upper portion of the treatment tank and is returned to treatment solution buffer tank 43 by way of aggregated insoluble content (sludge) pool 41 from discharge outlet 42.

Waste liquid pumped by pump 36 from waste liquid tank 34 is supplied by way of atomizing head 32 to the upper portion of treatment tank 31. Within treatment tank 31, waste liquid phase and treatment solution phase mix to produce emulsified flow (flowing emulsion). This takes the form of streams flowing in countercurrent fashion, with the treatment solution which contains solvent, organic constituents, and the like that have been extracted from the waste liquid occupying an upward-moving stream, and with what is left of the waste liquid following removal of organic constituents therefrom occupying a downward-moving stream. Solid content flocculating at the interface between the two phases within the flowing emulsion aggregates beneath the separated treatment solution phase in the upper portion of the treatment tank and is allowed to collect at aggregated insoluble content (sludge) pool 41, from which point it is recovered by way of discharge outlet 42 into treatment solution buffer tank 43 together with the treatment solution, at the bottom of which it is allowed to collect at aggregated insoluble content (sludge) pool 45 before being removed therefrom. The treated waste liquid is discharged into effluent tank 35 via effluent discharge outlet 39.

### THIRD EMBODIMENT

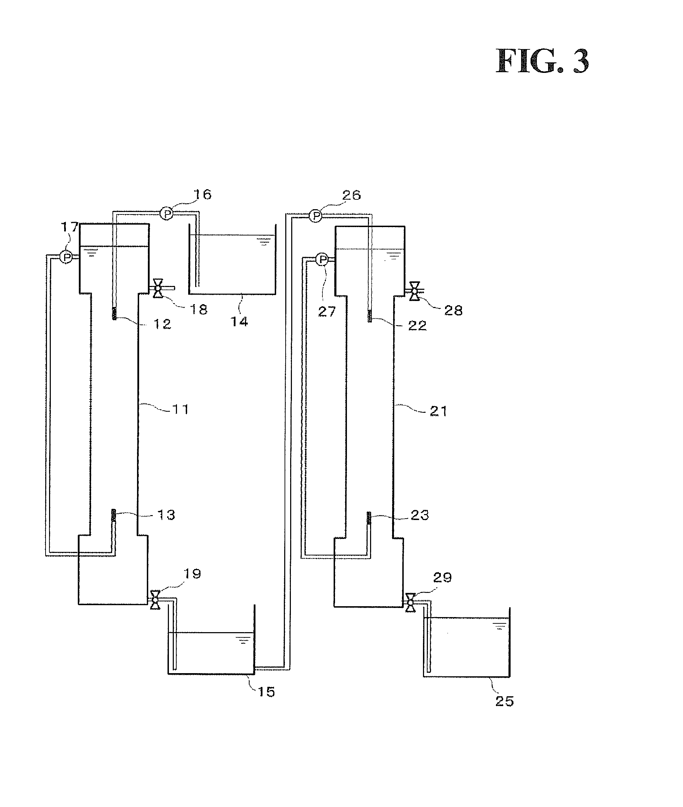

Described with reference to FIG. 3 is a situation involving two-stage treatment carried out in the context of a multistage waste liquid treatment method, this being another example of a waste liquid treatment method associated with the present invention.
As shown in FIG. 3, and addressing first the treatment that occurs in the first stage, treatment solution supplied from the lower portion of treatment tank 11 by way of atomizing head 13 travels upward, being circulated by pump 17. Waste liquid is supplied by pump 16 from waste liquid tank 14 to the upper portion of treatment tank 11 by way of atomizing head 12. Within treatment tank 11, waste liquid phase and treatment solution phase mix to produce a flowing emulsion, with the treatment solution which contains solvent, organic constituents, and the like that have been extracted from the waste liquid occupying an upward-moving stream therein, and with what is left of the waste liquid following removal of organic constituents therefrom occupying a downward-moving stream therein. Solid content flocculating at the interface between the two phases within the flowing emulsion aggregates beneath the separated treatment solution phase in the upper portion of the treatment tank, and is removed therefrom via aggregated insoluble content (sludge) discharge outlet 18. The treated waste liquid is discharged into effluent tank 15 via effluent discharge outlet 19 located at the lower portion of treatment tank 11.

Effluent which has undergone a first stage of treatment is then supplied by effluent liquid supply pump 26 to a second stage of treatment operations, where it undergoes treatment similar to that of the first stage.

### FOURTH EMBODIMENT

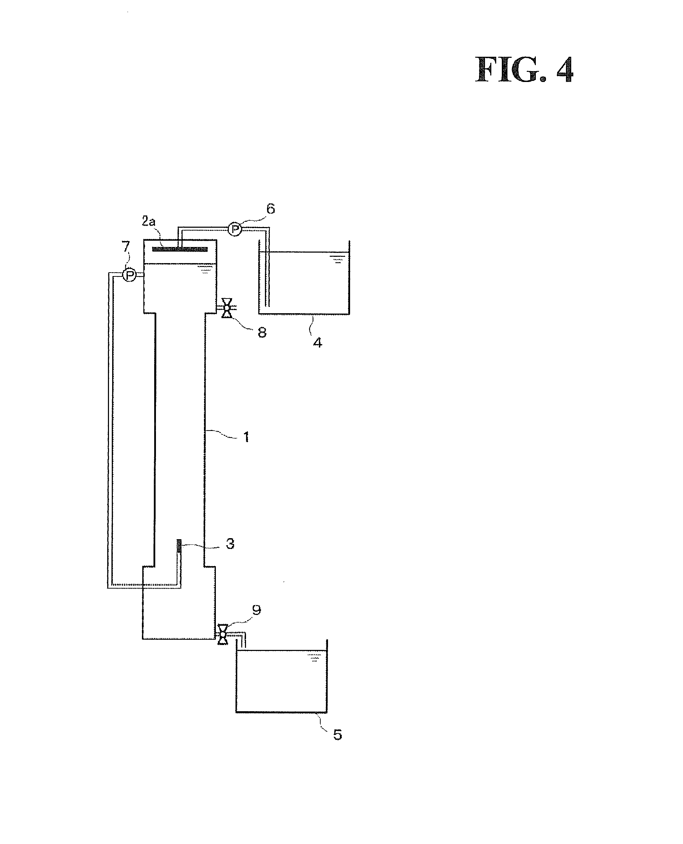

Described with reference to FIG. 4 is a technique in which waste liquid is supplied to treatment tank 1 using a technique in which it is atomized and supplied thereto in shower form, this being another example of a waste liquid treatment method associated with the present invention. Treatment solution supplied from the lower portion of treatment tank 1 travels to the upper portion thereof by way of atomizing head 3, being circulated by treatment solution circulation pump 7. Waste liquid supplied by pump 6 from waste liquid tank 4 to the upper portion of treatment tank 1 is supplied thereto in shower form from showerhead-like atomizing head 2a. Within treatment tank 1, waste liquid phase and treatment solution phase mix to produce emulsified flow (flowing emulsion). This takes the form of streams flowing in countercurrent fashion, with the treatment solution which contains solvent, organic constituents, and the like that have been extracted from the waste liquid occupying an upward-moving stream, and with what is left of the waste liquid following removal of organic constituents therefrom occupying a downward-moving stream. Solid content flocculating at the interface between the two phases within the flowing emulsion aggregates beneath the separated treatment solution phase in the upper portion of the treatment tank, and is discharged therefrom via aggregated insoluble content discharge outlet 8. The treated waste liquid is discharged into effluent discharge tank 5 via effluent discharge outlet 9 located at the lower portion of treatment tank 1.

### FIFTH EMBODIMENT

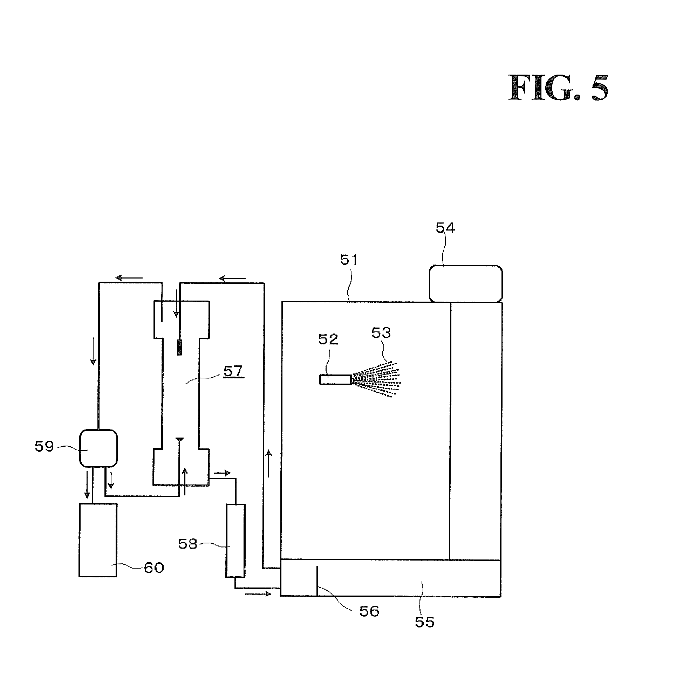

FIG. 5 shows in schematic fashion an example of a paint booth system associated with the present invention. Within paint booth 51, paint mist 53 is sprayed from spray nozzle 52 onto an object to be painted. Inside paint booth 51, ventilation is carried out by exhaust fan 54 and painting operations are carried out. Provided at the bottom of paint booth 51 is booth pool 55, paint waste liquid being delivered to paint waste liquid treatment apparatus 57 by way of a partition created by insoluble content (sludge) partition 56.

Paint waste liquid generated by paint booth 51 is treated at paint waste liquid treatment apparatus 57 using the flowing emulsion technique. Recovered effluent may in addition be treated at oil phase droplet removal apparatus 58 if the emulsion is to be more thoroughly separated. Aggregated insoluble content is separated from the treatment solution at aggregated insoluble content (sludge) trap 59 and is delivered to an aggregated insoluble content treatment apparatus. Furthermore, a portion of the treatment solution is returned to paint waste liquid treatment apparatus 57 and is recirculated. Aggregated insoluble content removed therefrom may be subjected to microbial treatment or the like for detoxification thereof.

### WORKING EXAMPLES

Below, a number of working examples of the present invention are presented with reference to TABLE 1.
The apparatus shown at FIG. 1 was employed. Moreover, treatment tank 1 was cylindrical, having a diameter of 60 mm and a length of 600 mm, and was such that a cylindrical unit 110 mm in diameter and 190 mm in length was attached thereto at the upper portion thereof, and a cylindrically shaped unit 110 mm in diameter and 150 mm in length was attached thereto at the lower portion thereof.

**TABLE 1**

| | Waste Liquid | Before Treatment | | | Additive | | | Number of Times Liquid-Liquid Extraction Treatment Carried Out | After Treatment | | |
|---|---|---|---|---|---|---|---|---|---|---|---|
| | | COD [mg/L] | n-Hex [mg/L] | SS [mg/L] | Magnesium Sulfate [mM] | Montmorillonite [g] | Flocculant [g] | | COD [mg/L] | n-Hex [mg/L] | SS [mg/L] |
| Working Example 1 | 0.25% aqueous solution of black water-based paint | 260 | | 100 | 100 | 10 | | 1 | 67 | | 3.8 |
| Working Example 2 | | | | | 100 | | 10 | 1 | 89 | | 4.2 |
| Working Example 3 | | | | | 100 | | | 1 | 120 | | 6.3 |
| Working Example 4 | | | | | 50 | | | 1 | 140 | | 30 |
| Working Example 5 | | | | | 50 | | | 2 | 120 | | 2.5 |
| Working Example 6 | | | | | 100 | | | 2 | 120 | | 2.5 |
| Working Example 7 | 0.5% aqueous solution of metallic paint | 890 | | 140 | 00 | | 10 | 1 | 310 | | 26 |
| Working Example 8 | 0.25% aqueous solution of blue water-based paint | 330 | | | 120 | | 10 | 1 | 81 | | |
| Working Example 9 | 0.25% aqueous solution of gray water-based paint | 510 | | | 120 | | 10 | 1 | 130 | | |
| Working Example 10 | 1 st water-based waste liquid containing cutting oil | 47 | 130 | | | 5 | | 1 | 21 | 0.8 | |
| Working Example 11 | 2nd water-based waste liquid containing cutting oil | 95 | 69 | | | 6 | | 1 | 49 | 2.6 | |

At Working Examples 1 through 9, aqueous solutions containing paint were employed as mock paint waste liquids. 10 liters of water was added to paint waste liquid tank 4, a prescribed amount of magnesium sulfate and/or other additive was added thereto, and a portion of this was supplied to treatment tank 1. At TABLE 1, where magnesium sulfate was present, the amount thereof is indicated as a fraction of the amount of waste liquid (mM; millimolar); where montmorillonite or flocculant was present, the amount thereof is indicated in terms of weight (grams). 1.2 liters of kerosene was then added to treatment tank 1. At this time, the liquid surface within the treatment tank was such that paint waste liquid atomizing head 2 was submerged within the liquid. A prescribed amount of a water-based automotive paint was then added to paint waste liquid tank 4, and this was used as the paint waste liquid sample.

At Working Examples 10 and 11, water-based waste liquid containing used cutting oil from a machine shop was added to the waste liquid tank, a prescribed amount of montmorillonite was added thereto, a portion of this was supplied to treatment tank 1, and 1.2 liters of kerosene was then added to treatment tank 1. At this time, the liquid surface within the treatment tank was such that the paint waste liquid atomizing head was submerged within the liquid.

Pump 7 was operated so as to cause treatment solution to be circulated at a rate of 0.5 L/min, and pump 6 was then made to supply paint waste liquid at a rate of 0.8 L/min. After supply of paint waste liquid had been initiated, effluent was discharged therefrom by way of the treated liquid discharge outlet, the apparatus being stopped when there was no more paint waste liquid. At Working Examples 5 and 6, recovered effluent was returned to waste liquid tank 4 and treatment was repeated.

Effect of treatment was evaluated by measuring chemical oxygen demand (COD), normal hexane extracts (n-Hex), and suspended solids (SS) in waste liquid prior to treatment and in effluent following treatment. COD measurements were carried out in accordance with the method at JIS K0102.17 (amount of oxygen consumed by potassium permanganate at 100° C), n-Hex measurements were carried out in accordance with the method at Table 4 attached to Environment Agency Notification No. 64 of 1974, and SS measurements were carried out in accordance with the method at Table 7 attached to Environment Agency Notification No. 59 of 1971.

For all Working Examples, COD, n-Hex, and SS all decreased by large amounts, and it is clear that the present invention made it possible to simultaneously achieve removal of organic constituents and suspended particulate constituents from paint waste liquid and the like.

### INDUSTRIAL UTILITY

The paint waste liquid treatment method of the present invention is capable of treating a wide variety of paint waste liquids and other liquids, including electrodeposition paint waste liquid, paint waste liquid collected from a paint booth, paint mist, organic solvents collected during painting or drying, degreasing waste liquid generated during pretreatment carried out prior to painting, and phosphate treatment waste liquid. Furthermore, the apparatus is compact and is of simple construction, and is easy to operate. Moreover, because effluent resulting from treatment is such that impurities have been removed therefrom, this may be recycled as liquid for use in cleaning the interiors of paint booths, and/or this may be reused for collection of solvents and the like contained within air ventilated from paint booths and drying facilities. Also, even where this is to be disposed of, disposal is made easy because impurities have been removed therefrom. Accordingly, the present invention has extremely significant industrial utility.

### BRIEF DESCRIPTION OF DRAWINGS

FIG. 1 Explanatory diagram showing an example of an apparatus for carrying out a paint waste liquid treatment method in accordance with a first embodiment.
FIG. 2 Drawing showing another example of an apparatus for carrying out a paint waste liquid treatment method associated with the present invention.
FIG. 3 Drawing showing an example in which the apparatus shown in FIG. 1 has been made into two connected stages.
FIG. 4 Drawing showing an example in which there is a variation on the waste liquid atomizing head in the apparatus shown in FIG. 1.
FIG. 5 Drawing showing in schematic fashion an example of a paint booth system associated with the present invention.

### EXPLANATION OF REFERENCE NUMERALS

- 1, 11, 21, 31: Treatment tank
- 2, 2a, 12, 22, 32: Waste liquid atomizing head
- 3, 13, 23, 33: Treatment solution atomizing head
- 4, 14, 34: Waste liquid tank
- 5, 15, 25, 35: Treatment effluent discharge tank
- 6, 16, 26, 36: Waste liquid supply pump
- 7, 17, 27, 37: Treatment solution circulation pump
- 8, 18, 28: Aggregated insoluble content (sludge) discharge outlet
- 9, 19, 29, 39: Effluent discharge outlet
- 40: Air purge valve
- 41: Aggregated insoluble content (sludge) pool
- 42: Treatment solution/aggregated insoluble content discharge outlet
- 43: Treatment solution buffer tank
- 44: Baffle plate
- 45: Aggregated insoluble content (sludge) pool
- 51: Paint booth
- 52: Spray nozzle
- 53: Paint mist
- 54: Exhaust fan
- 55: Booth pool
- 56: Insoluble content partition
- 57: Paint waste liquid treatment apparatus employing the flowing emulsion technique
- 58: Oil phase droplet removal apparatus
- 59: Aggregated insoluble content (sludge) trap
- 60: Aggregated insoluble content treatment apparatus

## Claims

1. A method of treating waste liquid containing paint, the method **characterized in that** at least one of either a treatment solution or a waste liquid containing paint is atomized and supplied in droplet form to a treatment tank, and a treatment solution phase and a waste liquid phase are mixed to produce flowing material in an emulsified state (a flowing emulsion), to treat said waste liquid.

2. A method of treating waste liquid containing paint according to claim 1, the method **characterized in that** the treatment solution is atomized and is supplied from one side of the treatment tank; and the waste liquid containing paint, which may be atomized or unatomized, is supplied from an other side thereof, the other side being opposite the one side.

3. A method of treating waste liquid containing paint according to claim 1 or 2, the method **characterized in that** the waste liquid containing paint is a water-based waste liquid, and the treatment solution is a nonaqueous organic solvent

4. A method of treating waste liquid containing paint according to any of claims 1 through 3, the method **characterized in that** a salting agent is present in the treatment tank.

5. A method of treating waste liquid containing paint according to any of claims 1 through 4, the method **characterized in that** silicate minerals are present in the treatment tank.

6. A method of treating waste liquid containing paint according to any of claims 1 through 5, the method **characterized in that** a flocculant containing a microbial enzyme solution is present in the treatment tank.

7. A method of treating waste liquid containing paint **characterized in that** a recyclable effluent is obtained from the method of treating waste liquid containing paint according to any one of claims 3 through 6.

8. A method of treating water-based waste liquid according to any one of claims 3 through 7, the method **characterized in that** a water-based waste liquid containing an organic constituent generated by a painting pretreatment operation, a machining operation, a resin manufacturing operation, a pigment manufacturing operation, a food manufacturing operation, and/or a cleaning operation is treated instead of the waste liquid containing paint.

9. A paint booth system **characterized in that** it comprises an apparatus for carrying out the method of treating waste liquid containing paint according to claim 7.
